# EUROPEAN PATENT APPLICATION

(11) **EP 2 267 290 A2**
(43) Date of publication of application: **29.12.2010**
(21) Application number: 10162388.2
(22) Date of filing: 10.05.2010
(51) Int. Cl.: F02C 7/36

(54) **A clamping assembly**

(30) Priority: 25.06.2009 GB 0910921
(71) Applicant: Rolls-Royce plc, London SW1E 6AT (GB)
(72) Inventor: Durling, Christopher John, Bristol, South Gloucestershire BS16 2JQ (GB)
(74) Representative: Tindall, Adam

(57) **Abstract**

A clamping assembly (120) for clamping a first member (108) to a second member (104), the assembly comprising: a first tubular portion (126) comprising first and second threads (130, 132), the first thread (130) being suitable for engagement with a third thread (134) provided on the second member; and a second tubular portion (128) comprising a fourth thread (136), the fourth thread being configured for engagement with the second thread (132) of the first tubular portion, the second tubular portion being configured so as to clamp the first member to the second member; wherein the first and second threads are orientated in the same direction and the thread pitch of the first thread is different to the thread pitch of the second thread.

## Description

This invention relates to a clamping assembly and particularly but not exclusively relates to a clamping assembly for a gas turbine engine.

### Background

Gas turbine engines typically require numerous components to be clamped or bolted to other components. Such components are often (but not exclusively) bearings, stub shafts, discs or gears and these components may, for example, require retention onto a shaft or into a housing.

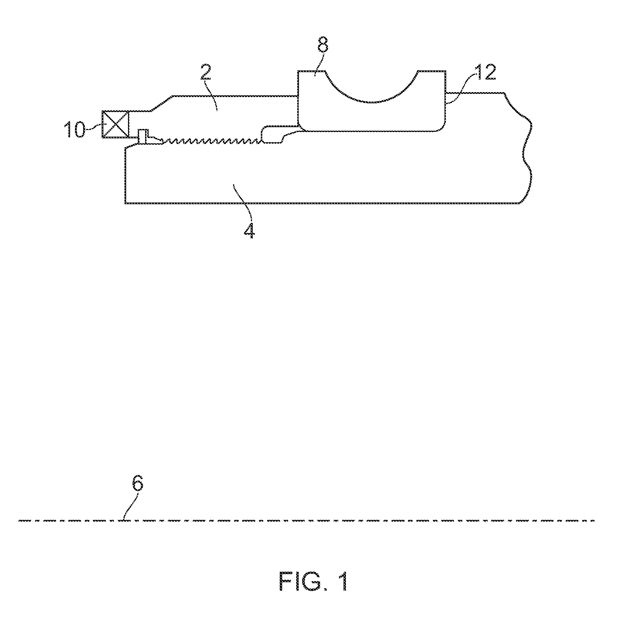

As shown in Figure 1, a common method of retaining such components is to use a threaded ring 2, which engages with a corresponding thread of a shaft 4 or a housing (not shown). The threaded ring 2 and shaft 4 are both disposed about a centreline 6. The ring 2 is tightened onto a component 8 using tooling which engages in slots formed by protrusions 10 which protrude from the ring 2. The component 8 is sandwiched between the threaded ring 2 and an abutment shoulder 12 in the shaft 4. The component is therefore secured to the shaft 4 by tightening the threaded ring 2.

The clamp load generated by the threaded ring 2 is determined by the amount of strain it introduces to the assembly comprising the shaft 4, the component 8 and the threaded ring 2. This in turn is determined by the amount the threaded ring is turned once all the components of the assembly are in close contact with each other.

The amount the threaded ring is turned is typically determined by applying a precalculated torque to the threaded ring. Another method used is angle-based tightening, where the threaded ring is turned through a given angle (once all the components of the assembly are in close contact with each other) regardless of the torque applied.

For the first method, the two factors which affect the torque required to achieve a given clamp load are the friction present in the assembly and the pitch of the thread on the threaded ring. For the second method, the only factor dictating the angle through which the threaded ring is turned is the pitch of the thread on the threaded ring.

With either of the above-mentioned methods, the higher the clamp load required for the assembly, the higher must be the level of torque applied to the threaded ring. Given that the friction present in the assembly is largely fixed, the only other factor that can be changed in the assembly is the pitch of the threaded ring.

The thread in the threaded ring serves to convert rotational movement of the threaded ring to axial movement and provides a mechanical advantage dependent on the pitch of the threads. The finer the pitch the higher the mechanical advantage. In other words, the finer the pitch the more axial clamping load can be generated for a given applied torque.

In a typical gas turbine, it is a frequent requirement to need very high clamp loads on certain assemblies. Very high clamp loads are always undesirable because of the problems they create at the engine build stage. A high clamp load requires a high torque to be applied to the threaded ring and this in turn can require specialised tooling that may be bulky and heavy. However, it is desirable from a build line and maintainability aspect that threaded ring assemblies can be tightened by one man using tooling requiring a lever of manageable length.

Thus, with the prior art threaded ring assembly, a high torque is required to achieve a high clamp load and the pitch of the threaded ring should be reduced to achieve a corresponding reduction in applied torque. However, this is unacceptable for several reasons. Firstly, a reduction in pitch gives a reduction in thread size and this may in turn lead to unacceptable stress levels in the threads. Secondly, smaller threads are more difficult to manufacture because the tolerances associated with the thread profile become proportionately tighter. Thirdly, smaller threads are more susceptible to handling damage. Lastly, fine pitch threads are susceptible to cross-threading on assembly. For these reasons, the pitch of threads on threaded rings used within the gas turbine industry is set to a minimum value. This is typically 1.5 mm and any pitch smaller than this is normally deemed unacceptable.

The present invention therefore seeks to address these issues.

### Statements of Invention

According to a first aspect of the present invention there is provided a clamping assembly for clamping a first member to a second member wherein the first member and second member are coaxial, the assembly comprising: a first tubular portion comprising first and second threads, the first thread being suitable for engagement with a third thread provided on the second member; and a second tubular portion comprising a fourth thread, the fourth thread being configured for engagement with the second thread of the first tubular portion, the second tubular portion being configured so as to clamp the first member to the second member; wherein the first tubular portion and second tubular portion are coaxial, and the first and second threads are orientated in the same direction and the thread pitch of the first thread is different to the thread pitch of the second thread. In other words, the first and third threads are orientated in one of a left and right hand direction and the second and fourth threads are orientated in the same direction.

One of the first or second tubular portions may at least in part be bounded by the other tubular portion.

The thread pitch of the first thread may be greater or less than the thread pitch of the second thread.

The first and second threads may be disposed on opposite sides of the first tubular portion. The first and second threads may be internal and external threads respectively. The corresponding third and fourth threads may be external and internal threads respectively. Alternatively, the first and second threads may be external and internal threads respectively. The corresponding third and fourth threads may be internal and external threads respectively.

The first and second threads may be disposed on the same side of the first tubular portion. Both the first and second threads may be internal threads. The corresponding third and fourth threads may be external threads. Alternatively both the first and second threads are external threads. The corresponding third and fourth threads may be internal threads.

One or more formations such as recesses or protrusions may be provided on the first and/or second tubular portions. The formations may be suitable for engagement with a tool.

The first and/or second tubular portions may be provided with one or more locking elements. The locking elements may secure the first tubular portion to the second member. The locking elements may secure the first tubular portion to the second tubular portion. The locking elements may secure the second tubular portion to the second member. The locking elements may comprise a resilient material so as to form a lock nut.

The second tubular portion may be held in guiding means. The guiding means may be disposed so as to restrict the rotation of the second tubular portion with respect to the second member. The guiding means may comprise one or more grooves, splines, slots and/or protrusions. The guiding means may be formed in the second tubular portion and/or second member.

The second member may comprise a shaft. Alternatively, the second member may comprise a housing. The first member may comprise the second tubular portion or the first member and second tubular portion may be separate components.

The second tubular portion may further comprise an abutment surface for engaging the first member so as to clamp the first member to the second member.

The thread pitch of the first and third threads may be approximately 2.0 mm. The thread pitch of the second and fourth threads may be approximately 1.5 mm.

A turbomachine may comprise a clamping assembly as described above. A gas turbine may comprise a clamping assembly as described above.

According to a second aspect of the present invention there is provided a method of clamping a first member to a second member wherein the first member and second member are coaxial, the method comprising: providing a first tubular portion comprising first and second threads, the first thread being suitable for engagement with a third thread provided on the second member; providing a second tubular portion comprising a fourth thread, the fourth thread being configured for engagement with the second thread of the first tubular portion, the second tubular portion being configured so as to clamp the first member to the second member; wherein the first tubular portion and second tubular portion are coaxial, and the first and second threads are orientated in the same direction and the thread pitch of the first thread is different to the thread pitch of the second thread; holding the second tubular portion substantially stationary with respect to the second member; and rotating the first tubular portion with respect to the second member.

The thread pitch of the first thread may be greater or less than the thread pitch of the second thread.

### Brief Description of the Drawings

For a better understanding of the present invention, and to show more clearly how it may be carried into effect, reference will now be made, by way of example, to the accompanying drawings, in which:-
Figure 1 is a sectional view of a prior art clamping assembly;
Figure 2 is a sectional view of a clamping assembly according to a first embodiment of the present invention;
Figure 3 is a cut-away perspective view of the clamping assembly according to the first embodiment of the present invention;
Figure 4 is a sectional view of a clamping assembly according to a second embodiment of the present invention;
Figure 5 is a sectional view of a clamping assembly according to a third embodiment of the present invention;
Figure 6 is a sectional view of a clamping assembly according to a fourth embodiment of the present invention; and
Figure 7 is a sectional view of a clamping assembly according to a fifth embodiment of the present invention.

### Detailed Description

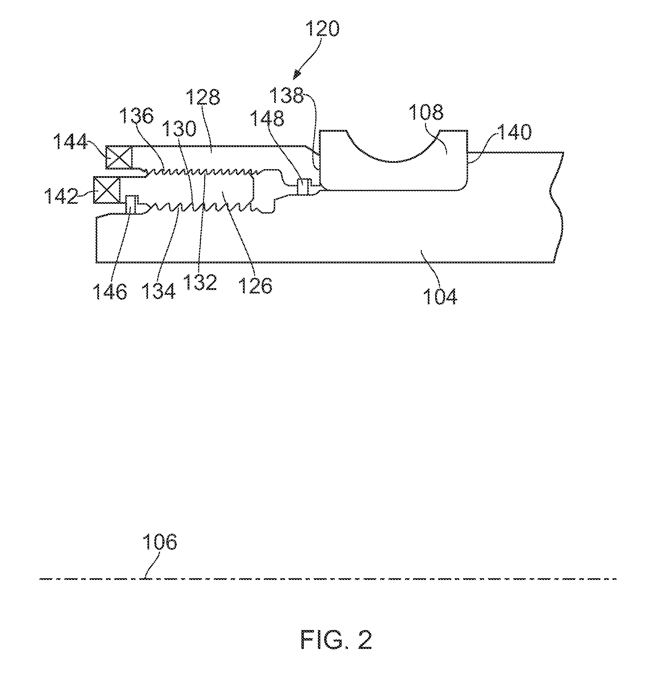

With reference to Figure 2, a clamping assembly 120 for clamping a first member 108 to a second member 104, according to a first embodiment of the present invention, comprises a first tubular portion 126 and a second tubular portion 128. The first and second members 108, 104 and first and second tubular portions 126, 128 rotate about a centreline 106. The first member 108, second member 104, first tubular portion 126 and second tubular portion 128 are coaxial. The first tubular portion 126 is bounded by the second tubular portion 128. The first tubular portion 126 comprises first and second threads 130, 132. The first thread 130 is suitable for engagement with a third thread 134 provided on the second member 104. The second tubular portion comprises a fourth thread 136. The fourth thread 136 is configured for engagement with the second thread 132 of the first tubular portion 126. The second tubular portion 128 further comprises a first abutment surface 138 for engaging the first member 108 so as to clamp the first member to the second member 104. The first member 108 is positioned between the first abutment surface 138 of the second tubular portion 128 and a second abutment surface 140 of the second member 104. In the first embodiment, the second member 104 comprises a shaft.

The threads of the first and third threads 130, 134 are orientated in one of a left and right hand direction and the threads of the second and fourth threads 132, 136 are orientated in the same direction. In the embodiment shown the thread pitch of the first and third threads 130, 134 is greater than the thread pitch of the second and fourth threads 132, 136. The second and fourth threads 132, 136 are threaded with a thread pitch which is equal to or greater than the minimum thread size. Accordingly, the thread pitch of the second and fourth threads 132, 136 may be 1.5 mm or greater, with the thread pitch of the first and third threads greater than the thread pitch of the second and fourth threads. For example, the thread pitch of the second and fourth threads 132, 136 may be 1.5 mm and the thread pitch of the first and third threads 130, 134 may be 2.0 mm. Alternatively the thread pitch of the first and third threads 130, 134 may be less than the thread pitch of the second and fourth threads 132, 136.

The first and second threads 130, 132 are disposed on opposite sides of the first tubular portion 126 such that the first and second threads are internal and external threads respectively. Accordingly, the corresponding third and fourth threads 134, 136 are external and internal threads respectively.

The first and second tubular portions 126, 128 are optionally provided with one or more first and second locking elements 146, 148 respectively. The first locking elements 146 secure the first tubular portion 126 to the second member 108. The second locking elements 148 secure the second tubular portion 128 to the second member 108. Additional locking elements may be provided to secure the first tubular portion 126 to the second tubular portion 128. The locking elements may comprise a resilient material so as to form a lock nut.

The clamping assembly 120 further comprises one or more formations such as protrusions 142 provided on the first tubular portion 126 and one or more formations such as protrusions 144 provided on the second tubular portion 128. The protrusions 142, 144 are suitable for engagement with a tool.

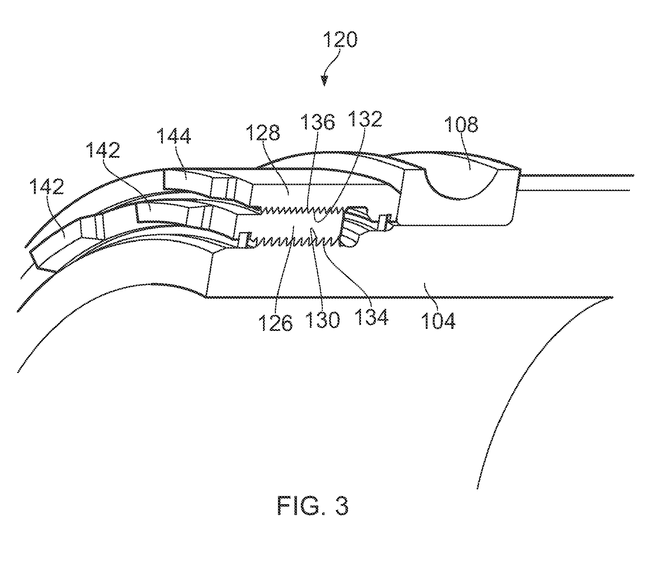

With reference to Figure 3, the protrusions 142, 144 are regularly spaced about the circumference of the first and second tubular portions 126, 128. Corresponding depressions are formed in the spaces between the protrusions. A spanner comprising a socket with dog teeth disposed in an end face may engage the spaces between the protrusions. Such a spanner may be used to rotate or hold the first and/or second tubular portions 126, 128. The spanner socket for the first tubular portion 126 may have a smaller diameter than the spanner socket for the second tubular portion 128 so that the spanner socket for the first tubular portion 126 fits inside the spanner socket for the second tubular portion 128. Similarly, the spanner for the first tubular portion 126 may have a longer socket than the spanner for the second tubular portion 128 so that the spanner handle for the first tubular portion 126 clears the socket for the second tubular portion 128.

To assemble the clamping assembly 120, the first and second tubular portions 126, 128 are screwed fully into each other away from the shaft, i.e. second member 104. With the first member 108 located about the second member 104, the first and second tubular portions 126, 128 (as effectively one component) are then screwed onto the second member 104 until the second tubular portion 128 contacts the clamped component at the first abutment surface 138. From this moment on, only the first tubular portion 126 is turned relative to the second member 104 and the second tubular portion 128, the second tubular portion 128 being held stationary by a spanner. The second tubular portion 128 will in any case tend to remain stationary because of the friction at the first abutment surface 138.

The effect of turning only the first tubular portion 126 is that for every single turn of the first tubular portion 126, it translates axially towards the first member 108 by the value of the pitch of the thread on the first and third threads 130, 134. At the same time, the second tubular portion 128, which is in contact with the first member 108, translates axially away from the first member 108 relative to the first tubular portion 126 by the value of the pitch of the thread on the second and fourth threads 132, 136. (This is because the first and second threads 130, 132 are threaded in the same direction and, by remaining stationary, the second tubular portion 128 effectively rotates in the opposite direction with respect to the first tubular portion 126 than the first tubular portion rotates with respect to the second tubular portion.) Thus, providing the thread pitch of the first and third threads 130, 134 differs to the pitch of the second and fourth threads 132, 136, the net effect is that the second tubular portion 128, which is clamping the first member 108, is translated axially towards the first member 108 by the difference in the thread pitch of the first and second threads 130, 132.

By way of example: if the thread pitch of the first and third threads 130, 134 is 2.0 mm and the thread pitch of the second and fourth threads 132, 136 is 1.5 mm, then for every single turn of the first tubular portion 126, the second tubular portion 128 translates 2.0-1.5 = 0.5 mm. Thus the effective pitch of the clamping assembly 120 of the present invention is 0.5 mm. This is ⅓ of the equivalent pitch achieved with the prior art described above with the minimum pitch of 1.5 mm. Furthermore, the effect on the torque required to be applied to the first tubular portion 126 is reduced in approximate proportion to the reduction in pitch. Thus approximately ⅓ of the torque that would be required for the same clamping force with the prior art configuration is required for the present invention.

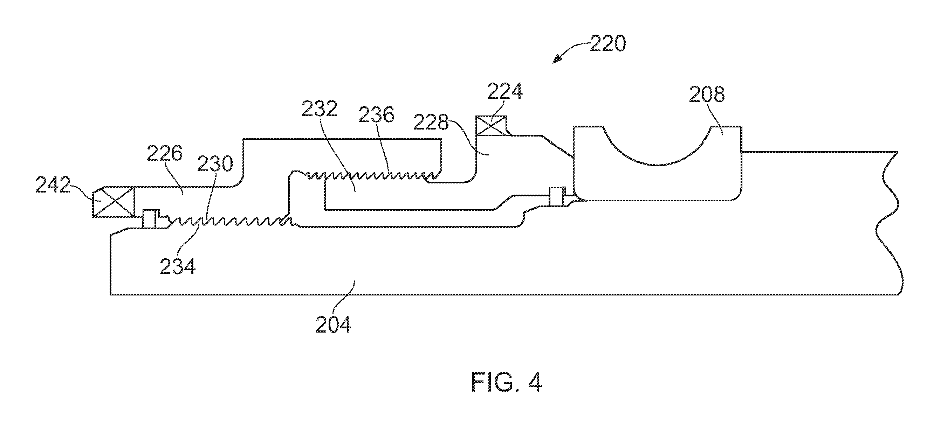

According to a second embodiment of the present invention as shown in Figure 4, the first and second threads 230,232 are disposed on the same side of the first tubular portion 226 such that both the first and second threads 230,232 are internal threads disposed at different ends of the first tubular portion 226. The corresponding third and fourth threads 234,236 are external threads disposed on the second member 204 and second tubular portion 228 respectively. The first member 208, second member 204, first tubular portion 226 and second tubular portion 228 are coaxial. The second tubular portion 228 is in part bounded by the first tubular portion 226.

The second tubular portion 228 of the second embodiment is slidably disposed about the second member 204 and is provided between the second member 204 and the first tubular portion 226. The second tubular portion 228 is held in guiding means, the guiding means being disposed so as to restrict the rotation of the second tubular portion 228 with respect to the second member 204. The guiding means may comprise one or more grooves, splines, slots and/or protrusions and the guiding means may be formed in the second tubular portion 228 and/or second member 204. The guiding means in effect removes the requirement for a tool to ensure that there is no rotation of the second tubular portion 228 . Alternatively, the second tubular portion 228 may be prevented from rotation relative to the shaft 204 by engaging a tool in protrusions 244 projecting outside the envelope of the first tubular portion 226.

The clamping assembly of the second embodiment is otherwise substantially the same as that for the first embodiment, for example, the second tubular portion 228 abuts the first member 208 which is to be clamped and the thread pitch of the second thread 232 is smaller than that for the first thread 230. Alternatively the thread pitch of the first and third threads 230, 234 may be less than the thread pitch of the second and fourth threads 232, 236. Accordingly, the second embodiment functions in the same way as the first embodiment.

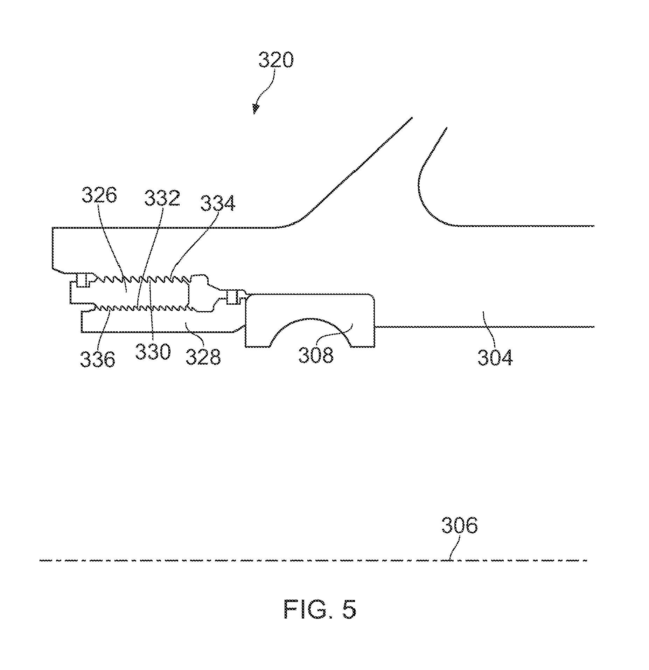

With reference to Figure 5, a clamping assembly 320 for clamping a first member 308 to a second member 304, according to a third embodiment of the present invention, comprises a first tubular portion 326 and a second tubular portion 328. The first and second members 308, 304 and first and second tubular portions 326, 328 rotate about a centreline 306. The first member 308, second member 304, first tubular portion 326 and second tubular portion 328 are coaxial. The second tubular portion 328 is bounded by the first tubular portion 326. The third embodiment of the present invention differs from that of the first and second embodiments in that the second member 304 comprises a housing as opposed to a shaft. In other words, the first member 308 is clamped to a housing instead of a shaft. Accordingly, the second tubular portion 328 fits inside the first tubular portion 326 and the first and second threads 330, 332 of the first tubular portion 326 are external and internal threads respectively. Similarly, the corresponding third and fourth threads 334, 336 are internal and external threads respectively.

The clamping assembly 320 of the third embodiment is otherwise substantially the same as that for the first and second embodiments, for example, the second tubular portion 328 abuts the first member 308 which is to be clamped and the thread pitch of the second thread 332 differs to that of the first thread 330. That is to say, the thread pitch of the second thread 332 may be greater or smaller than that of the first thread 330 Accordingly, the third embodiment functions in the same way as the first embodiment. For example, the first tubular portion 326 is screwed into the second tubular portion 328 away from the second member 304, i.e. the housing. The combination is then screwed into the second member 304 until the second tubular portion 328 abuts the first member 308, i.e. the component to be clamped. From this point on only the first tubular portion 326 is turned, whilst the second tubular portion 328 is held stationary. For every complete turn of the first tubular portion 326, the second tubular portion 328 will translate axially by the difference between the thread pitches of the first and second threads 330, 332.

However, in contrast with the first embodiment, the spanner socket for the first tubular portion 326 may have a larger diameter than the spanner socket for the second tubular portion 328 so that the spanner socket for the first tubular portion 326 surrounds the spanner socket for the second tubular portion 328. Similarly, the spanner for the first tubular portion 326 may have a shorter socket than the spanner for the second tubular portion 328 so that the spanner handle for the second tubular portion 328 clears the socket for the first tubular portion 326.

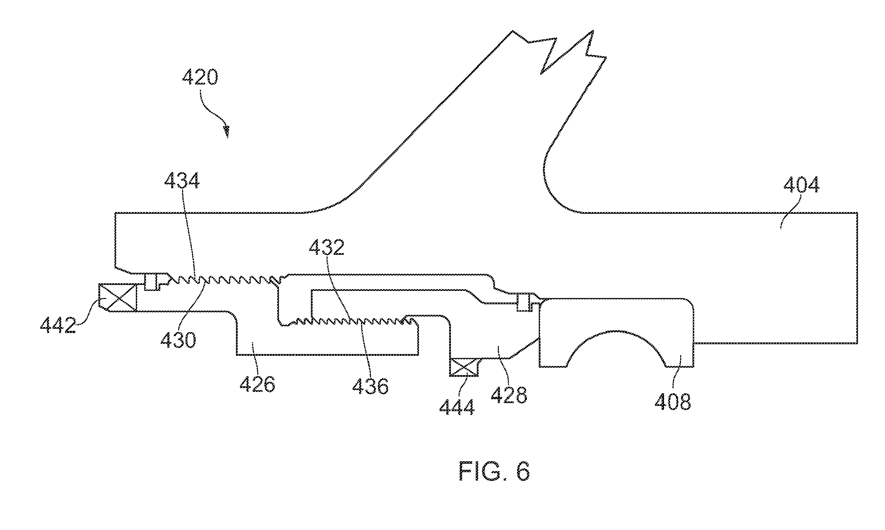

According to a fourth embodiment of the present invention as shown in Figure 6, the first and second threads 430, 432 are disposed on the same side of the first tubular portion 426 such that both the first and second threads 430,432 are external threads disposed at different ends of the first tubular portion 426. The corresponding third and fourth threads 434,436 are internal threads disposed on the second member 404 and second tubular portion 428 respectively. The first member 408, second member 404, first tubular portion 426 and second tubular portion 428 are coaxial. The first tubular portion 426 is in part bounded by the second tubular portion 428.

The second tubular portion 428 of the fourth embodiment is slidably disposed about the second member 404 and is provided between the second member 404 and the first tubular portion 426. The second tubular portion 428 is held in guiding means, the guiding means being disposed so as to restrict the rotation of the second tubular portion 428 with respect to the second member 404. The guiding means may comprise one or more grooves, splines, slots and/or protrusions and the guiding means may be formed in the second tubular portion 428 and/or second member 404. The guiding means in effect removes the requirement for a tool to ensure that there is no rotation of the second tubular portion 428. Alternatively, the second tubular portion 428 may be prevented from rotation relative to the shaft 404 by engaging a tool in protrusions 444 projecting outside the envelope of the first tubular portion 426.

The clamping assembly of the fourth embodiment is otherwise substantially the same as that for the third embodiment, for example, the second tubular portion 428 abuts the first member 408 which is to be clamped and the thread pitch of the second thread 432 is smaller than that for the first thread 430. Alternatively the thread pitch of the first and third threads 430, 434 may be less than the thread pitch of the second and fourth threads 432, 436. Accordingly, the fourth embodiment functions in the same way as the third embodiment.

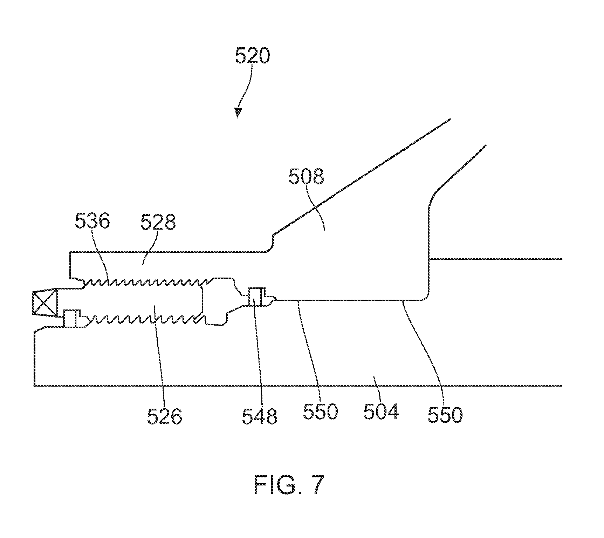

With reference to Figure 7, a clamping assembly 520 for clamping a first member 508 to a second member 504, according to a fifth embodiment of the present invention, comprises a first tubular portion 526 and a second tubular portion 528. The fifth embodiment is substantially the same as the first embodiment except that the second tubular portion 528 is integral to the first member 508. In other words, the second tubular portion 528 is part of the component to be clamped, i.e. the first member 508. The first member 508, second member 504, first tubular portion 526 and second tubular portion 528 are coaxial. The first tubular portion 526 is in part bounded by the second tubular portion 528.

The first member 508 may have one or more interference fits 550 with the second member 504. There may be sufficient friction at the interference fits 550 such that second locking elements 548 are not required. Alternatively, the first member 508 may be splined to the second member 504, in which case the second locking elements 548 are not required. The fifth embodiment offers the considerable benefit of being able to install and extract the first member 508 without the need for any extra tooling apart from the tool required to engage the first tubular portion 526.

The thread length of the fourth thread 536 on the second tubular portion 528 of the first member 508 may be designed with the axial length of the interference fits in mind. To avoid very long lengths of threads the interference fits may be kept short as shown in Figure 5.

The alternative configuration of the fifth embodiment in which the second tubular portion is integral to the first member is also applicable to the other embodiments of the present invention. For example, the third embodiment, in which the second member comprises a housing, may also have a first member which is integral to the second tubular portion.

The present invention as described above advantageously overcomes the requirement to have a small thread pitch without the use of a small thread profile. This is achieved through the use of a difference in pitch between an inner and outer thread on the first tubular portion. As a result the amount of torque that needs to be applied to a clamping component to achieve a given clamp load is reduced.

Whilst the thread pitch of the present invention has been described using the example dimensions of 1.5 mm and 2.0 mm, it will be appreciated that the thread pitch may be of any size.

A further advantage of the present invention is that because the second tubular portion does not turn against the first member, friction and galling is eliminated between the second tubular portion and the first member, i.e. the component to be clamped. Further still the present invention allows the clamp load to be applied more accurately and with less scatter in the value of the loads compared with the prior art. These advantages apply whether the clamp load is achieved by torque tightening the first tubular portion or by angle tightening the second tubular portion.

The invention is not restricted to gas turbines and is applicable to any machinery requiring high clamp loads to be achieved with low torque. The present invention is particularly useful for larger machines where large forces may need to be applied with human scale tooling.

## Claims

1. A clamping assembly for clamping a first member (108;208;308;408;508) to a second member (104;204;304;404;504) wherein the first member and second member are coaxial, the assembly comprising:
a first tubular portion (126;526;326;426;526) comprising first (130;230;330;430;530) and second (132;232;332;432;532) threads, the first thread being suitable for engagement with a third thread (134;334;434;534) provided on the second member; and
a second tubular portion (128;228;328;428;528) comprising a fourth thread (136;236;336;436;536), the fourth thread being configured for engagement with the second thread of the first tubular portion, the second tubular portion being configured so as to clamp the first member to the second member;
wherein the first tubular portion and second tubular portion are coaxial, and the first and second threads are orientated in the same direction and the thread pitch of the first thread is different to the thread pitch of the second thread.

2. A clamping assembly as claimed in claim 1 wherein one of the first (126;526;326;426;526) or second (128;228;328;428;528) tubular portions is at least in part bounded by the other tubular portion.

3. A clamping assembly as claimed in claim 1 or claim 2, wherein the first (130; 330; 530) and second threads (132; 332; 532) are disposed on opposite sides of the first tubular portion (126; 326; 526).

4. A clamping assembly as claimed in claim 3, wherein the first (130;530) and second (132; 532) threads are internal and external threads respectively, the corresponding third (134; 534) and fourth threads (136;536) being external and internal threads respectively.

5. A clamping assembly as claimed in claim 3, wherein the first (330) and second (332) threads are external and internal threads respectively, the corresponding third (334) and fourth (336) threads being internal and external threads respectively.

6. A clamping assembly as claimed in claim 1 or claim 2, wherein the first (230; 430) and second (232; 432) threads are disposed on the same side of the first tubular portion (226; 426).

7. A clamping assembly as claimed in claim 6, wherein both the first (230) and second (232) threads are internal threads, the corresponding third (234) and fourth (236) threads being external threads.

8. A clamping assembly as claimed in claim 6, wherein both the first (430) and second (432) threads are external threads, the corresponding third (434) and fourth (436) threads being internal threads.

9. A clamping assembly as claimed in any preceding claim, wherein the first and/or second tubular portions are provided with one or more locking elements (146;148).

10. A clamping assembly as claimed in any preceding claim, wherein the second tubular portion is held in guiding means, the guiding means being disposed so as to restrict the rotation of the second tubular portion with respect to the second member.

11. A clamping assembly as claimed in any preceding claim, wherein the second member comprises one of a shaft (104; 204; 404) and a housing.

12. A clamping assembly as claimed in any preceding claim, wherein the first member (508) comprises the second tubular portion (528).

13. A clamping assembly as claimed in any one of claims 1 to 12, wherein the thread pitch of the first thread is greater than the thread pitch of the second thread.

14. A clamping assembly as claimed in any one of claims 1 to 12, wherein the thread pitch of the first thread is less than the thread pitch of the second thread.

15. A method of clamping a first member (108;208;308;408;508) to a second member(104;204;304;404;504) wherein the first member and second member are coaxial, the method comprising:
providing a first tubular portion (126;526;326;426;526) comprising first (130;230;330;430;530) and second (132;232;332;432;532) threads, the first thread being suitable for engagement with a third thread (134;334;434;534) provided on the second member;
providing a second tubular portion (128;228;328;428;528) comprising a fourth thread (136;236;336;436;536), the fourth thread being configured for engagement with the second thread of the first tubular portion, the second tubular portion being configured so as to clamp the first member to the second member; wherein the first tubular portion and second tubular portion are coaxial, and the first and second threads are orientated in the same direction and the thread pitch of the first thread is different to the thread pitch of the second thread;
holding the second tubular portion substantially stationary with respect to the second member; and
rotating the first tubular portion with respect to the second member.
